# EUROPEAN PATENT APPLICATION

(11) **EP 1 667 479 A1**
(43) Date of publication of application: **07.06.2006**
(21) Application number: 05257458.9
(22) Date of filing: 03.12.2005
(51) Int. Cl.: H04Q 7/34

(54) **Method for collecting diagnostic information with respect to a failed call in a wireless system**

(30) Priority: 06.12.2004 US 5502
(71) Applicant: LUCENT TECHNOLOGIES INC., Murray Hill, New Jersey 07974-0636 (US)
(72) Inventor: Bakshi, Rakesh, Bridgewater New Jersey 08807 (US); Durdik, Roy Herbert, Madison New Jersey 07940 (US); Schwab, Karl E., Gladstone New Jersey 07934 (US); Welsh, Steven Martin, Aurora, IL 60504 (US)
(74) Representative: Sarup, David Alexander

(57) **Abstract**

A method is provided for controlling a wireless communications system. The method comprises establishing a first communications session with the communications system, and thereafter discontinuing the first communications session with the communications system. Information related to preselected parameters associated with the first communications session is collected in response to the first communications session being discontinued. Once a second communications session is established with the communications system, at least a portion of the stored information is delivered to the communications system via the second communications session.

## Description

### BACKGROUND OF THE INVENTION

### 1. FIELD OF THE INVENTION

This invention relates generally to telecommunications, and, more particularly, to wireless communications.

### 2. DESCRIPTION OF THE RELATED ART

In the field of wireless telecommunications, such as cellular telephony, a system typically includes a plurality of base stations distributed within an area to be serviced by the system. Various users within the area, fixed or mobile devices, may then access the system and, thus, other interconnected telecommunications systems, via a radio link with one or more of the base stations. Typically, a mobile device maintains communications with the system as the mobile device passes through an area by communicating with one and then another base station, as the user moves. The mobile device may communicate with the closest base station, the base station with the strongest signal, the base station with a capacity sufficient to accept communications, *etc.*

In a wireless system, there are various reasons for a communication session or call to fail, such as traffic channel confirmations failures, lost calls, dropped calls, *etc.* Moreover, the failure and the reason for it may be unknown to the base station. In fact, even if the base station becomes aware of the call failure relatively promptly, it may nevertheless be unaware of the reason for the call failure. For example, if the call failed because it was dropped due to faulty coverage in a certain geographic location, the base station may simply be unaware of the location of the mobile device at the time of the call failure.

It is a complicated and time-intensive task to obtain sufficient diagnostic information to determine the exact location of the failure events and the reasons for the failure events. Generally, to obtain diagnostic information regarding these call failure events, a diagnostic monitor is connected directly to the mobile device and a series of tests are manually run by a technician at various geographical regions to try and recreate and analyze call failure events.

The present invention is directed to overcoming, or at least reducing, the effects of one or more of the problems set forth above.

### SUMMARY OF THE INVENTION

In one aspect of the instant invention, a method is provided for controlling a communications system. The method comprises establishing a first communications session with the communications system, and thereafter discontinuing the first communications session with the communications system. Information related to preselected parameters associated with the first communications session is collected in response to the first communications session being discontinued. Once a second communications session is established with the communications system, at least a portion of the stored information is delivered to the communications system via the second communications session.

In another aspect of the instant invention, a method for controlling a communications system is provided. The method comprises establishing a first communications session with a mobile device, and delivering a signal to the mobile device instructing the mobile device to collect information related to preselected parameters associated with the first communications session in response to the first communications session being discontinued. A second communications session is established with the mobile device, and at least a portion of the collected information from the mobile device is received via the second communications session.

### BRIEF DESCRIPTION OF THE DRAWINGS

The invention may be understood by reference to the following description taken in conjunction with the accompanying drawings, in which like reference numerals identify like elements, and in which:
Figure 1A is a block diagram of a communications system, in accordance with one embodiment of the present invention;
Figure 1B is a stylistic representation of a region in which the communications system of Figure 1A may be employed;
Figure 2 depicts a block diagram of one embodiment of a Base station and a mobile device used in the communications system of Figure 1; and
Figure 3 is a flow diagram illustrating one embodiment of a control strategy employed in the communications system of Figures 1-3 for collecting the diagnostic information regarding call failure events.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defmed by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

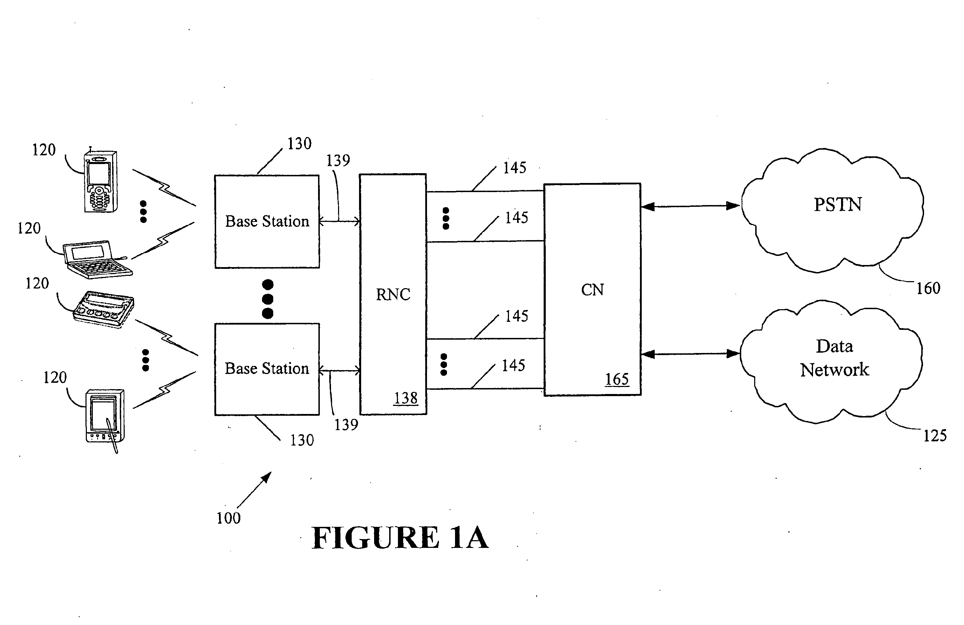

Turning now to the drawings, and specifically referring to Figure 1A, a communications system 100 is illustrated, in accordance with one embodiment of the present invention. For illustrative purposes, the communications system 100 of Figure 1A is a Universal Mobile Telephone System (UMTS), although it should be understood that the present invention may be applicable to other systems that support data and/or voice communication, such as Code Division Multiple Access (CDMA). The communications system 100 allows one or more mobile devices 120 to communicate with a data network 125, such as the Internet, and/or a public telephone system (PSTN) 160 through one or more base stations 130. The mobile device 120 may take the form of any of a variety of devices, including cellular phones, personal digital assistants (PDAs), laptop computers, digital pagers, wireless cards, and any other device capable of accessing the data network 125 and/or the PSTN 160 through the base station 130.

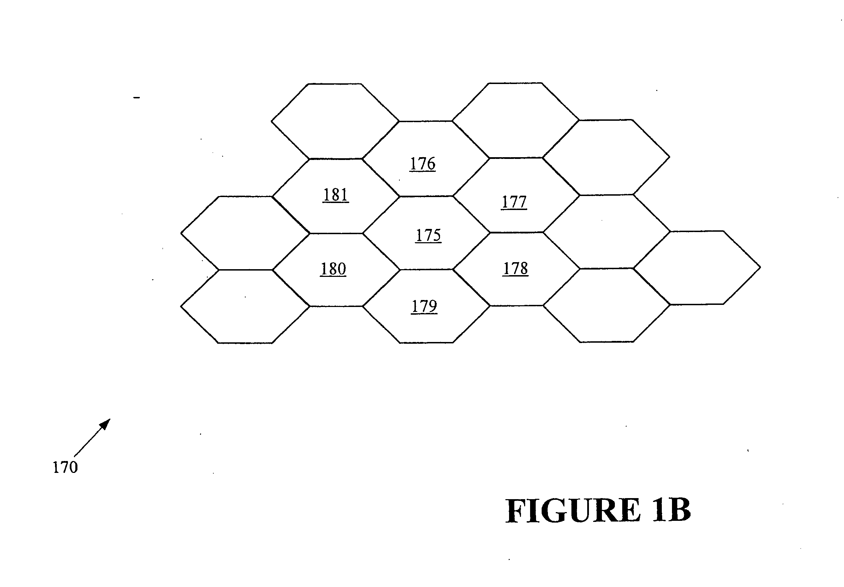

In one embodiment, a plurality of the base stations 130 may be coupled to a Radio Network Controller (RNC) 138 by one or more connections 139, such as T1/EI lines or circuits, ATM virtual circuits, cables, optical digital subscriber lines (DSLs), and the like. Although one RNC 138 is illustrated, those skilled in the art will appreciate that a plurality of RNCs 138 may be utilized to interface with a large number of base stations 130. Generally, the RNC 138 operates to control and coordinate the base stations 130 to which it is connected. The RNC 138 of Figure 1 generally provides replication, communications, runtime, and system management services, and, as discussed below in more detail below, may be involved in coordinating the transition of a mobile device 120 during transitions between the base stations 130.

As is illustrated in Figure 1B, a region 170 to be serviced by the system 100 is separated into a plurality of regions or cells, each being associated with a separate base station 130. Typically, each cell has a plurality of adjacent neighboring cells. For example, the cell 175 has six neighboring cells 176-181 such that a mobile device 120 entering the cell 175 may travel from one of the neighboring cells 176-181. Thus, as the mobile device 120 enters the cell 175 from any of the neighboring cells 176-181, the mobile device may need to transition from communicating with the cell 175 to communicating with the neighboring cell 176-181 that it is entering.

Returning to Figure 1A, the RNC 138 is also coupled to a Core Network (CN) 165 via a connection 145, which may take on any of a variety of forms, such as T1/EI lines or circuits, ATM virtual circuits, cables, optical digital subscriber lines (DSLs), and the like. Generally the CN 165 operates as an interface to the data network 125 and/or to the public telephone system (PSTN) 160. The CN 165 performs a variety of functions and operations, such as user authentication, however, a detailed description of the structure and operation of the CN 165 is not necessary to an understanding and appreciation of the instant invention. Accordingly, to avoid unnecessarily obfuscating the instant invention, further details of the CN 165 are not presented herein.

Thus, those skilled in the art will appreciate that the communications system 100 enables the mobile devices 120 to communicate with the data network 125 and/or the PSTN 160. It should be understood, however, that the configuration of the communications system 100 of Figure 1A is exemplary in nature, and that fewer or additional components may be employed in other embodiments of the communications system 100 without departing from the spirit and scope of the instant invention.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

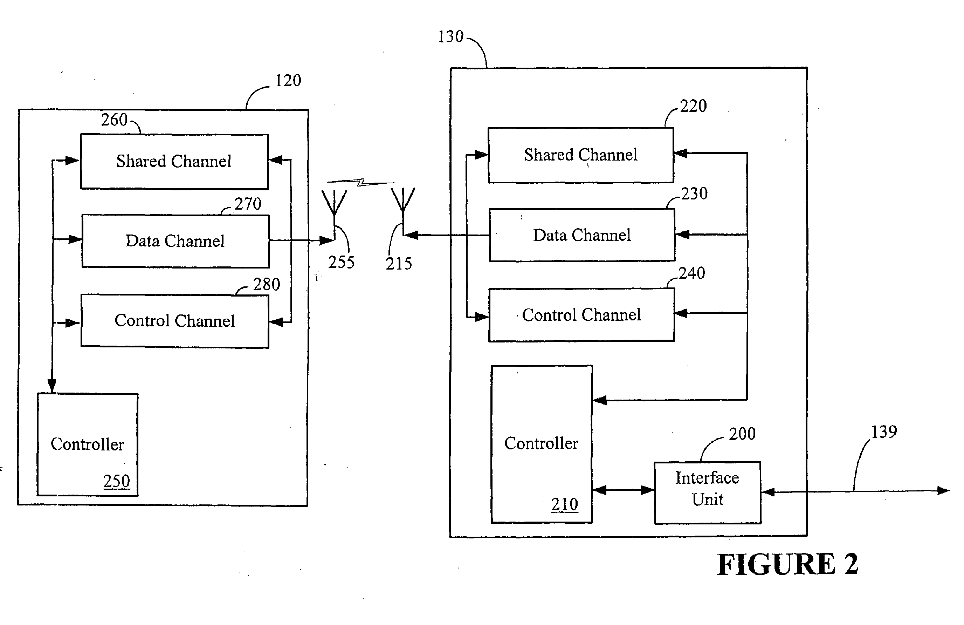

Referring now to Figure 2, a block diagram of one embodiment of a functional structure associated with an exemplary base station 130 and mobile device 120 is shown. The base station 130 includes an interface unit 200, a controller 210, an antenna 215 and a plurality of channels: such as a shared channel 220, a data channel 230, and a control channel 240. The interface unit 200, in the illustrated embodiment, controls the flow of information between the base station 130 and the RNC 138 (see Figure 1A). The controller 210 generally operates to control both the transmission and reception of data and control signals over the antenna 215 and the plurality of channels 220, 230, 240 and to communicate at least portions of the received information to the RNC 138 via the interface unit 200.

The mobile device 120 shares certain functional attributes with the base station 130. For example, the mobile device 120 includes a controller 250, an antenna 255 and a plurality of channels: such as a shared channel 260, a data channel 270, and a control channel 280. The controller 250 generally operates to control both the transmission and reception of data and control signals over the antenna 255 and the plurality of channels 260, 270, 280.

Normally, the channels 260, 270, 280 in the mobile device 120 communicate with the corresponding channels 220, 230, 240 in the base station 130. Under the operation of the controllers 210, 250, the channels 220, 260; 230, 270; 240, 280 are used to effect a controlled scheduling of communications from the mobile device 120 to the base station 130.

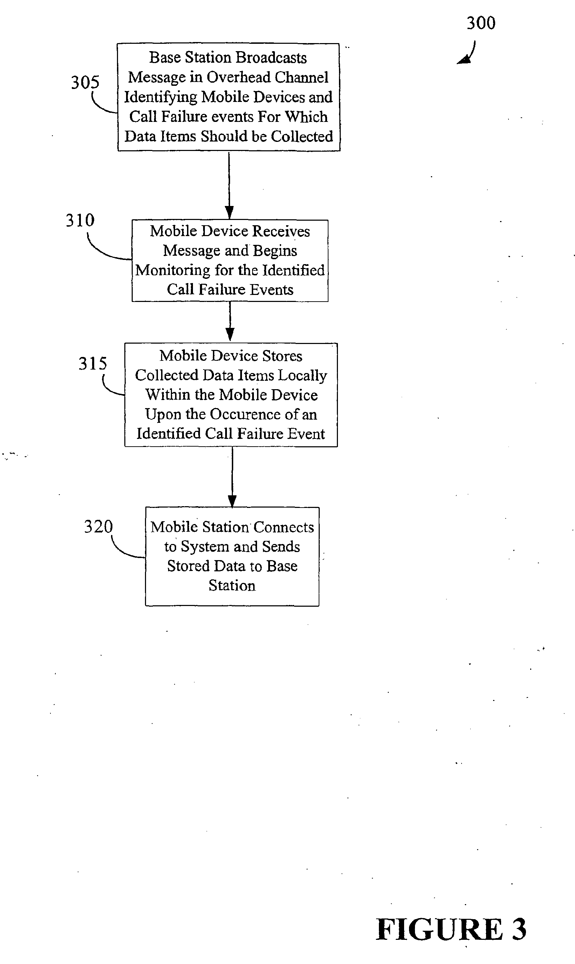

Turning now to Figure 3, a flow diagram 300 illustrating one embodiment of a methodology that may be used to collect and analyze diagnostic information related to call failure events in the system 100 is illustrated. Those skilled in the art will appreciate that the flow diagram may represent software, hardware, and/or firmware operated with or by the controllers 210, 250 located in the base station 130 and the mobile device 120.

Generally, it is desirable for the system 100 to obtain diagnostic information regarding a call failure event after actual failure event occurs. Using this approach, a large amount of data from actual call failure events can be collected and then analyzed to determine the location and the reasons for the failures.

In some applications in which the instant invention may be employed, there may be a high rate of mobile devices 120 having failure events, and thus, it may be useful in at least one embodiment of the instant invention for selected mobile devices 120 to be controllably instructed to send the diagnostic data. That is, to avoid scenarios in which many mobile devices 120 attempt to transmit diagnostic data at the same time, it may be useful to schedule the mobile devices 120 to transmit data at a desired time period.

The classification of the mobile devices 120 may be used in determining a schedule at which the various mobile devices 120 may be allowed to transmit their diagnostic data. Those skilled in the art will appreciate that any of a variety of factors may be used, such as the Access Overload Class of the mobile device 120 and the type of call failure events. The Access Overload Classes and Call Failure Events Required information may be broadcast in overhead channel messages *(i.e.,* System Parameters) by the base station 130 so that the mobile device 120 knows to collect this data on failure prior to acquiring the system 100. This change may be accomplished by modifying the air interface standards for the various wireless protocols (i.e., IS-2000 for CDMA).

The ability to activate this data collection mechanism for the mobile devices 120 may be controlled on a per cell site basis. The activation shall be for specific failure events and shall be able to be required only for a subset of mobile phones that attempt to make calls on the given cell site. Various other configurable parameters can be added as required to obtain the desired amount of data. This allows for specific studies of geographical areas where performance rates are not at desired levels. As illustrated in block 305, the base station 130 may send a message to the mobile devices 120 in an overhead channel message identifying one or more call failure events for which data items should be collected by the mobile devices 120. In this way, the mobile devices 120 are aware that they need to collect the required information upon the occurrence of one or more particular call failure events identified in the message broadcast in the overhead channel.

As shown in block 310, if the failure event being broadcasted in the overhead message occurs, and the mobile device 120 is in the subset of mobile devices 120 required to send diagnostic information, then the mobile device 120 will collect diagnostic data items, if the data items are available. For example, the mobile device 120 may collect one or more of the following types of information:
1. Geographical location based on longitude and latitude;
2. Time of failure event;
3. Reason for failure event (no L2 ack, fade timer expired, *etc.);*
4. Active set at the time of failure event;
5. Frequency in use at the time of failure;
6. Received signal strengths of active set;
7. Cell System ID and Base Station ID;
8. Past history of EbNo set points;
9. Past history of mobile Rx and Tx power;
10. Past history of the number of frames with errors;
11. "Key" parameters in use by the mobile -- such as: T_ADD, T_DROP, service option, radio configuration, *etc*.; and
12. For the last N seconds (where N is configurable and broadcasted in overhead message):
   - Active/candidate/neighbor set information (number, PN, walsh code, carrier, strength, phase), and change history;
   - Received/transmitted over-the-air messages; minimum info needed is GPS timestamp and layer 2 information;
   - Other mobile specific events (like mobile disabling/enabling transmitter); and
   - Forward/reverse frame counts (sliding window over those N seconds) such as: number full rate frame received, number erasures received, *etc*.

As discussed above, it is desirable for the system 100 to obtain diagnostic information regarding a call failure event after the actual failure event occurs. However, after these failure events, the mobile device 120 is no longer in communication with the base station 130, and thus, the mobile device 120 cannot relay this information back to the system 100. Thus, as shown in block 315 in one embodiment of the instant invention, it may be useful for the mobile device 120 to at least temporarily store diagnostic information in its local memory after the failure event occurs. Thereafter, as shown in block 320, when the mobile device 120 subsequently establishes communications with the system 100, the diagnostic information can then be relayed to the base station 130 using any of a variety of communications schemes, such as a data burst capability (Short Message Service) currently available for wireless networks.

After a failure event occurs for the mobile device 120, it will store at least some of the above-identified types of data in memory. Once the mobile device 120 reconnects to the same system 100 (e.g., based on System ID), it will send the above data using a data burst message on a reverse channel. This data can then be sent to an offline data storage center where it can be post processed. The data can be used to create location specific information for failure events. In addition, the other diagnostic information can be processed to determine the probable causes for the failure events at the specific locations.

Those skilled in the art will appreciate that the various system layers, routines, or modules illustrated in the various embodiments herein may be executable control units (such as the controllers 210, 250 (see Figure 2)). The controllers 210, 250 may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the controllers 210, 250 cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. It is therefore evident that the particular embodiments disclosed above may be altered or modified and all such variations are considered within the scope and spirit of the invention. Accordingly, the protection sought herein is as set forth in the claims below.

## Claims

1. A method for controlling a communications system, comprising:
establishing a first communications session with the communications system;
collecting information related to preselected parameters associated with the first communications session in response to the first communications session being discontinued;
establishing a second communications session with the communications system; and
delivering at least a portion of the collected information to the communications system via the second communications session.

2. A method, as set forth in claim 1, wherein collecting information related to preselected parameters associated with the first communications session in response to the first communications session being discontinued further comprises collecting information related to preselected parameters associated with the first communications session in response to the first communications session experiencing a call failure event.

3. A method, as set forth in claim 2, further comprising receiving a signal from the communications system identifying at least one type of call failure event and wherein collecting information related to preselected parameters associated with the first communications session in response to the first communications session experiencing a call failure event further comprises collecting information related to preselected parameters associated with the first communications session in response to the first communications session experiencing a call failure event of the type identified in the signal from the communications system.

4. A method, as set forth in claim 2, wherein receiving the signal from the communications system identifying at least one type of call failure event further comprises receiving the signal from the communications system identifying at least one type of call failure event via an overhead channel.

5. A method, as set forth in claim 1, wherein collecting information related to preselected parameters associated with the first communications session in response to the first communications session being discontinued further comprises storing the collected information locally.

6. A method, as set forth in claim 5, wherein storing the collected information locally further comprises storing the collected information in a mobile device.

7. A method, as set forth in claim 1, wherein delivering at least a portion of the collected information to the communications system via the second communications session further comprises delivering at least a portion of the collected information to the communications system via a data burst in the second communications session.

8. A method, as set forth in claim 1, wherein delivering at least a portion of the collected information to the communications system via the second communications session further comprises delivering at least a portion of the collected information to the communications system via a short message service in the second communications session.

9. A method, as set forth in claim 1, wherein collecting information related to preselected parameters associated with the first communications session in response to the first communications session being discontinued further comprises collecting geographical information of a mobile station that was connected to the communications system via the first communications session.

10. A method, as set forth in claim 1, wherein collecting information related to preselected parameters associated with the first communications session in response to the first communications session being discontinued further comprises collecting information regarding a reason that the first communications session was discontinued.
